**Europäisches Patentamt**

**European Patent Office**

**Office européen des brevets**

(19)

(11) Veröffentlichungsnummer: **0 284 595**
**B1**

(12) ## EUROPÄISCHE PATENTSCHRIFT

(45) Veröffentlichungstag der Patentschrift:
**31.01.90**

(51) Int. Cl.⁴: **F16G 13/06**, B65G 17/06

(21) Anmeldenummer: **88890049.5**

(22) Anmeldetag: **10.03.88**

(54) Kette, insbesondere für Kettenförderer.

(30) Priorität: **17.03.87 AT 636/87**

(43) Veröffentlichungstag der Anmeldung:
**28.09.88 Patentblatt 88/39**

(45) Bekanntmachung des Hinweises auf die Patenterteilung:
**31.01.90 Patentblatt 90/5**

(84) Benannte Vertragsstaaten:
**DE FR GB IT**

(56) Entgegenhaltungen:
**DE-A- 1 556 173**
**DE-A- 3 347 340**
**DE-C- 694 391**
**DE-C- 853 682**
**DE-C- 941 597**
**DE-C- 3 310 950**
**DE-C- 3 439 362**
**FR-A- 391 733**
**FR-A- 2 116 117**
**FR-E- 2 299**
**US-A- 633 738**
**US-A- 3 944 059**
**US-A- 4 232 783**

(73) Patentinhaber: **Steirische Kettenfabriken Pengg-Walenta KG, Theodor-Körner Strasse 59, A-8020 Graz(AT)**

(72) Erfinder: **Rosegger, Josef, Palbersdorf 5, A-8621 Thörl(AT)**

(74) Vertreter: **Matschnig, Franz, Dipl.-Ing., Siebensterngasse 54 Postfach 452, A-1071 Wien(AT)**

## Beschreibung

Die Erfindung bezieht sich auf eine Kette, insbesondere für Kettenförderer, mit in parallelen Ebenen angeordneten länglichen Kettengliedern, die durch Querbolzen miteinander verbunden sind, wobei je zwei benachbarte Querbolzen durch zwei in Abstand voneinander liegende Laschenpaare unter Bildung eines Laschengliedes miteinander verbunden sind und jedes Laschenpaar aus zumindest je einer Innenlasche und einer Außenlasche besteht.

Eine Kette dieser Art ist aus der DE-A 3 347 340 bekannt geworden. Es handelt sich hiebei um eine sogenannte Laschenkette.

Nach dem Stand der Technik bestehen Ketten für Kettenförderer aus Rundstahl- oder Laschengliedern, die endlos über Antriebs- bzw. Umlenkkettenräder geführt und Becher oder andere Förderelemente tragen.

Rundstahlketten weisen den Vorteil auf, daß sie robust und einfach im Aufbau sowie weitgehend wartungsfrei sind und, bezogen auf die gleiche Bruchkraft, billiger hergestellt werden können als Laschenketten. Nachteilig sind die höhere Pressung in den Gelenkflächen, Probleme beim Anbringen der Förderelemente und die Notwendigkeit, aufwendige Kettenräder verwenden zu müssen. Ein Rundstahlkettenförderer ist beispielsweise der DE-A 1 556 173 zu entnehmen.

Demgegenüber benötigen Laschenketten bloß einfache und billig herstellbare Zahnscheiben als Kettenräder. Laschenketten sind auch für höhere Laufgeschwindigkeiten geeignet und können für die Übertragung sehr hoher Kräfte ausgelegt werden. Von besonderem Einfluß auf die Vorteile einer Laschenkette ist die wegen der größeren Gelenkflächen niedrigere Flächenpressung in den Gelenken. Allerdings ist eine besondere Schmierung der Ketten erforderlich, bei deren Fortfall und/oder starker Verschmutzung ein Verreiben aneinanderliegender Laschen oder der Laschen auf den Querbolzen und in der Folge ein Kettenbruch auftreten kann.

Eine Kette, die im weitesten Sinn als Laschenkette angesprochen werden kann, ist aus der US-A 4 232 783 bekannt geworden. Jedoch können bei diesen Ketten, an deren Unterseite eine Profilierung nach Art einer Zahnstange vorgesehen ist, Zähne von Kettenrädern nicht zwischen Laschenpaaren eingreifen.

Eine aus der DE-C 941 597 bekannte Kette liegt weitab von der Erfindung. Diese Kette besitzt überhaupt keine Querbolzen und ist nicht zerlegbar. Dementsprechend ist die Kette nur mit Schwierigkeiten, keineswegs jedoch automatisiert herstellbar und das Auswechseln gebrochener Kettenglieder führt zu langen Ausfällen. Die Flachglieder sollen mit ihrer Unterseite auf Schienen laufen und zu einer geringeren Abnützung der Kette zufolge des Schienenkontaktes führen. Diese Flachglieder mit je zwei Löchern, deren Ränder noch dazu toroidale Form aufweisen, sind mit vernünftigen Kosten nicht herstellbar. Im Prinzip ist die Kette nach der DE-PS 941 597 nichts anderes, als eine modifizierte Rundgliederkette (mit abwechselnd um 90° gegeneinander verdrehten Gliedern), bei der die Zähne von Kettenrädern nur in jedes zweite Glied eingreifen können. Besonders bei Kettenrädern mit kleinem Durchmesser wird hiedurch die Abnützung auf Grund eines ungleichmäßigen Umlaufes unerträglich.

Eine in der US-A 633 738 beschriebene Kette gleicht in einigen Ausführungsformen auf den ersten Blick dem Anmeldungsgegenstand. Tatsächlich zeigen sich bei näherer Betrachtung jedoch tiefgreifende Unterschiede, die letztlich auch erklären, warum diese, im Jahre 1891 erfundene Kettenform sich nie durchsetzen konnte.

Die Kette nach der US-Patentschrift besitzt nicht wie der Anmeldungsgegenstand zwei in Abstand voneinander liegende Laschenpaare sondern vielmehr einstückig ausgebildete Blöcke, die gegebenenfalls mit Schlitzen (Fig. 12 bis 15) oder einer Durchbrechung (Fig. 18) versehen sein können. Benachbarte Blöcke sind über ein mittig gelegenes Rundglied oder über zwei außen liegende Rundglieder miteinander verbunden. Die bekannte Kette weist einige schwerwiegende Nachteile auf. Die Herstellung der Blöcke ist ausgesprochen teuer. Die Zähne von Kettenrädern können nur in jedes zweite Glied eingreifen, es sei denn, man greift zu der Maßnahme, wie in Fig. 18 dargestellt. Dort ist jeder Block mit einer Ausnehmung versehen, damit Zähne auch in den Block eingreifen können. Zusätzlich trägt jeder Block nach außen stehende Laschen, welche die Rundglieder bei entspannter Kette zurückhalten sollen. Es versteht sich, daß eine solche Ausbildung wohl zeichnerisch darstellbar, in der Praxis bei vernünftigen Kosten jedoch nicht realisierbar ist und in eine von der Erfindung verschiedene Richtung führt.

Bei einer aus der FR-A 391 733 bekannt gewordenen Kette handelt es sich um eine Laschenkette, deren Glieder Stanzteile aus Blech sind. Von üblichen, genieteten Laschenketten unterscheidet sich diese Laschenkette bloß dadurch, daß die Verbindung über Hülsen auf Bolzen erfolgen kann. Alles vorhin zu Laschenketten gesagte, trifft auch auf diese Laschenkette zu.

Für eine aus der DE-C 694 391 bekannt gewordene Kette charakteristisch sind gesenkgeschmiedete Blöcke, die je vier nach außen abstehende Nietzapfen aufweisen. In diese Nietzapfen werden entweder Laschen oder Rundstahlglieder zur Bildung einer Kette eingehängt und je zwei Nietzapfen an einer Seite der Blöcke werden mittels einer Lasche verbunden, wobei besonders viel Spiel verbleiben soll, damit die Kette allseits beweglich bleibt. Die in der vorliegenden Anmeldung beanspruchte besondere Kombination von Laschen und Rundstahlgliedern ist dieser Literaturstelle weder entnehmbar, noch durch diese nahegelegt – auch nicht in Kombination mit anderen Dokumenten.

Ziel der Erfindung ist die Schaffung einer Kette, welche die eingangs erwähnten Vorteile der Rundstahlketten mit jenen der Laschenketten verbindet.

Dieses Ziel läßt sich mit einer Kette der eingangs genannten Art erreichen, bei welcher erfindungsgemäß benachbarte Laschenglieder durch unmittelbar mit den Innenseiten ihrer Gliedrundungen oder unter Zwischenschaltung von Lagermittlen an den Querbolzen der Laschenglieder angreifende Rund- bzw. Profilstahlglieder miteinander verbunden sind, wobei zwischen den Laschen eines Laschenpaares zumindest je ein Rundstahlglied angeordnet ist.

Die Kette nach der Erfindung eignet sich für alle in einer Ebene umgelenkten Antriebe, wie zum Beispiel senkrecht, schräg oder horizontal laufende Förderanlagen, insbesondere für Becherwerke. Sie besitzt den Vorteil einer robusten, praktisch wartungsfreien Ausbildung, bei der die Gefahr des Steckenbleibens der Kettenglieder nicht besteht. Die Antriebs- und Umlenkräder können einfach mit Zahneingriff in jede Gliedteilung ausgeführt sein. Das Befestigen der Förderelemente kann problemlos an den Laschen erfolgen, und zwar entweder an aufeinanderfolgenden Laschengliedern oder unter Auslassung eines oder mehrerer Laschenglieder, Vervielfacht man die Einzellaschen bzw. die Rundstahlglieder so können ohne Beeinträchtigung der Eigenschaften Bruchkraftwerte über 4MN erreicht werden.

Im Sinne einer einfachen Befestigung der Förderelemente ist es zweckmäßig, wenn die Außenlaschen als Winkellaschen mit je einem um etwa 90° nach außen umgebogenen Steg zur Befestigung der Förderelemente ausgebildet sind oder wenn die Innenlaschen als Schenkel eines U-Profils mit einem Quersteg zur Befestigung der Fördermittel ausgebildet sind oder wenn die Außenlaschen als Schenkel eines U-Profils mit einem Quersteg zur Befestigung der Fördermittel ausgebildet sind.

Um Fördergut von den Gelenken möglichst fernzuhalten empfiehlt es sich, wenn die Laschen jedes Laschenpaares an der Ober- und/oder Unterseite durch einen Längssteg geschlossen sind. Hiebei zeichnet sich eine bevorzugte Variante dadurch aus, daß die Innenlaschen als Winkellaschen mit je einem um 90° nach außen gebogenen Steg zur Befestigung der Fördermittel ausgebildet sind und jedes Laschenpaar an seiner Oberseite durch diesen Steg geschlossen ist.

Zwecks Erzielung höherer Bruchkraftwerte ohne Beeinträchtigung der Vorteile des Förderers kann vorgesehen sein, daß je zwei oder mehr aneinanderliegende Innen- und/oder Außenlaschen vorgesehen sind bzw. daß je zwei oder mehr parallel zueinander liegende Rundstahlglieder pro Laschenpaar vorgesehen sind.

Es ist vorteilhaft, wenn die Laschen eines Laschenpaares einen in ihrer Längsmitte liegenden, z.B. angeschweißten Quersteg aufweisen, da hiedurch unter anderem die Festigkeit des Laschenpaares erhöht wird.

Einen besonders wirksamen Schutz gegen vorzeitigen Verschleiß der Gelenke erhält man, wenn der Raum zwischen den Laschen eines Laschenpaares mit einem nachgiebigen Füllstoff, z.B. mit Polyurethanschaum, gefüllt ist.

Zur Erhöhung der Lebensdauer kann es günstig sein, wenn die Querbolzen im Angriffsbereich der Rundstahlglieder zur Erhöhung der Gelenkfläche in an sich bekannter Weise profilierten Querschnitt aufweisen oder wenn die Rund- bzw. Profilstahlglieder mittels Büchsen, Walzlagern od.dgl. an den Querbolzen gelagert sind.

Die Abstützung der Förderkette, insbesondere bei Horizontal- oder Schrägförderern, ist einfach möglich, wenn die Querbolzen in an sich bekannter Weise je über die Laschenpaare hinaus verlängert und mit äußeren Stützrollen od.dgl. versehen sind.

Zur Verbesserung der Stabilität und Festigkeit kann es empfehlenswert sein, wenn die Innenlaschen auf die Querbolzen aufgepreßt sind und wenn die Innenlaschen an einem Ansatz der Querbolzen anliegen. Auch können aus diesem Grund die Innenlaschen nach innen je an einer auf dem Bolzen aufgeschobenen Distanzhülse abgestützt sein.

Das Zerlegen der Förderkette bzw. das Auswechseln von Gliedern wird besonders vereinfacht, wenn die Außenlaschen an ihrer Außenseite mittels Sicherungsringen, Spannstiften od.dgl. an den Querbolzen gesichert sind.

Die Erfindung samt ihren weiteren Vorteilen ist im folgenden an Hand beispielsweiser Ausführungsformen näher erläutert, die in der Zeichnung veranschaulicht sind. In dieser zeigen Fig. 1a eine schematische Unteransicht eines Teiles einer ersten Ausführungsform einer Kette nach der Erfindung, wobei die Förderelemente nicht dargestellt sind,

Fig. 1b eine schematische Ansicht in Förderrichtung,

Fig. 1c eine schematische Seitenansicht,

Fig. 2 in einer Ansicht wie Fig. 1b eine zweite Ausführungsform,

Fig. 3 in einer ebensolchen Ansicht eine dritte Ausführungsform,

Fig. 4a und 4b in den Fig. 1a und 1b entsprechenden Ansichten eine vierte Ausführungsform,

Fig. 5a und 5b in ebensolchen Ansichten eine fünfte Ausführungsform,

die Fig. 6, 7 und 8 eine sechste, siebente und achte Ausführungsform und

Fig. 9a bis f verschiedene Querschnittsformen der Rund- bzw. Profilstahlglieder.

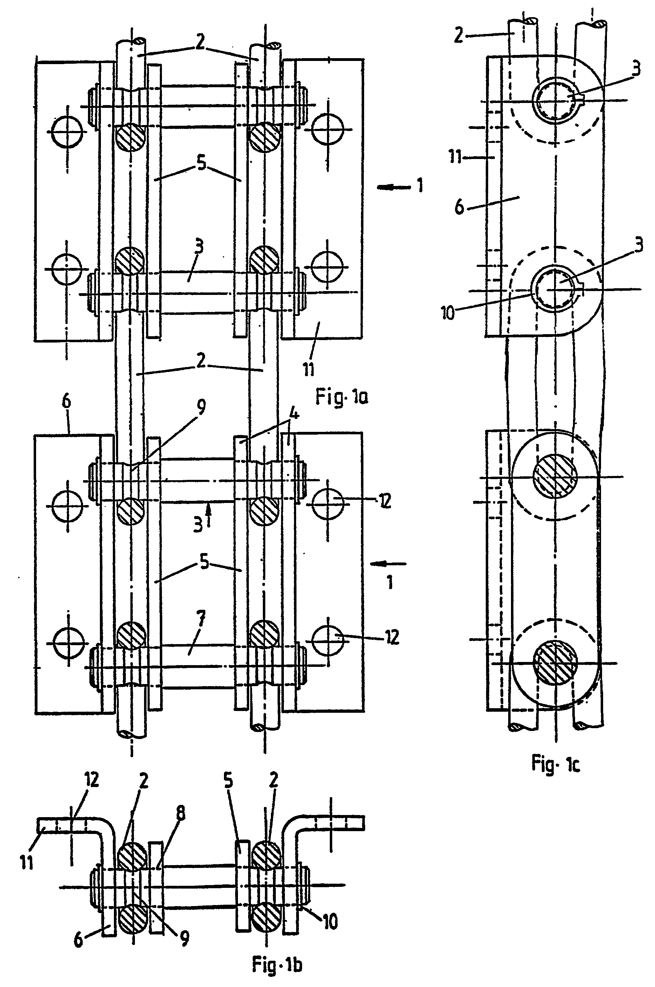

Gemäß Fig. 1a, b, und c ist die Förderkette eines erfindungsgemäßen Kettenförderers aus Laschengliedern 1 und zwischen diesen liegenden Rundstahlgliedern 2 zusammengesetzt. Jedes Laschenglied 1 weist zwei Querbolzen 3 mit auf diesen in Abstand voneinander angeordneten Laschenpaaren 4 auf. Jedes Laschenpaar 4 besitzt eine Innenlasche 5 und eine Außenlasche 6.

Die Querbolzen 3 sind mit einem verdickten Mittelteil 7 ausgebildet, sodaß die Innenlaschen 5, die auf die Bolzen 3 aufgepreßt werden, nach innen durch den vom Übergang des Mittelteils 7 auf die dünneren Außenteile gebildeten Ansatz 8 abgestützt sind. Wie ersichtlich, sind zwei benachbarte Laschenglieder 1 durch die Rundstahlglieder 2 miteinander verbunden. Diese Rundstahlglieder 2 greifen mit den Innenseiten ihrer Gliedrundungen an den Querbolzen 3 an, die im Angriffsbereich der Glieder 2 zur Erhöhung der Gelenkfläche Umfangsrillen 9 besitzen.

Beim Zusammenbau der Förderkette werden zunächst die Innenlaschen 5 auf die Querbolzen 3 aufgepreßt, sodann werden die Rundstahlglieder 2 eingefügt und hierauf die Außenlaschen 6 auf die Querbolzen 3 geschoben und mit Hilfe eines Sicherungsringes 10 an den Außenenden der Querbolzen 3 gesichert. Selbstverständlich können für diesen Zweck auch andere bekannte Befestigungs- bzw. Sicherungsmittel, etwa Spannbolzen, Verwendung finden. Die Außenlaschen 6 können gewünschtenfalls durch nicht gezeigte Ansätze od.dgl. an den Querbolzen 3 gegen Verschieben nach innen fixiert sein.

Bei diesem ersten Ausführungsbeispiel sind die Außenlaschen 6 als Winkellaschen ausgebildet, die einen um 90° nach außen abgebogenen Steg 11 besitzen. Zur Befestigung von Förderelementen, wie z.B. von Förderbechern, können in dem Steg 11 Bohrungen 12 ausgebildet sein.

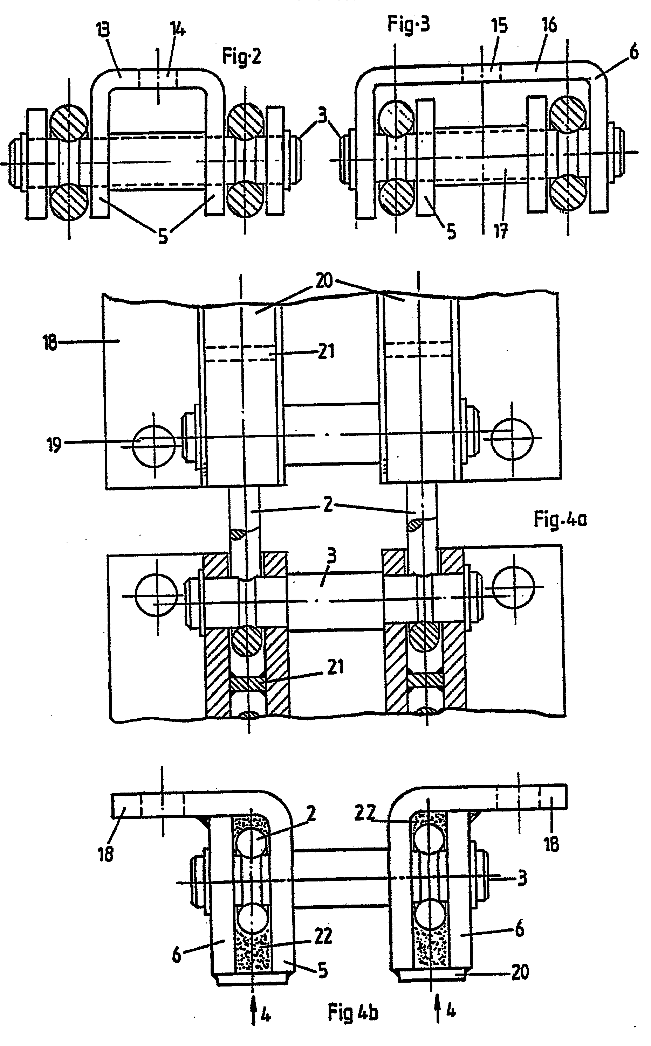

Wie Fig. 2 entnehmbar, können die Innenlaschen 5 als Schenkel eines U-Profils ausgebildet sein, dessen Quersteg 13 zur Befestigung der Förderelemente dient und dementsprechend mit Bohrungen 14 versehen sein kann.

Eine sinngemäße Ausbildung, bei welcher die Außenlaschen 6 die Schenkel eines U-Profils mit einem Bohrungen 15 aufweisenden Quersteg 16 sind, ist Fig. 3 zu entnehmen.

Bei den Ausführungen nach Fig. 2 und 3 ist zwischen den Innenlaschen 5 eine auf den Bolzen 3 aufgeschobene Distanzhülse 17 vorgesehen. Die Verwendung eines U-Profils, dessen Schenkel die Innen- oder Außenlaschen bilden, erhöht zusätzlich die Festigkeit der Laschenglieder 1.

Bei der Ausführungsform nach Fig. 4a, b ist der Innenraum jedes Laschenpaares 4 nach oben und unten abgeschlossen. Die Innenlaschen 5 sind je als Winkellaschen mit einem um 90° nach außen gebogenen Steg 18 ausgebildet. Der Steg 18 berührt die oberen Endkanten der zugehörigen Außenlasche 6 und ist an dieser angeschweißt. In den Stegen 18 sind Bohrungen 19 für die Befestigung der Förderelemente ausgebildet. An der Unterseite jedes Laschenpaares liegt an den Endkanten der Außen- und Innenlasche 6, 5 ein Längssteg 20 auf, der mit den Laschen verschweißt ist. Dieser Längssteg 20 deckt den Raum zwischen den Laschen 5, 6 nach unten ab. In Längsmitte der Laschenpaare 4 sind deren Laschen 5, 6 innen durch einen angeschweißten Quersteg 21 miteinander verbunden. Dieser Quersteg trennt den Raum zwischen den beiden Laschen 5, 6 in zwei Bereiche.

Wegen des oberen und unteren Abschlusses der Laschenpaare 4 ist das Eindringen von Fördergut oder anderen Verunreinigungen zu den Gelenken der Kette sehr erschwert. Insbesondere bei agressiven Fördergütern, wie z.B. bei Schlacke, ergibt sich dadurch eine wesentlich höhere Lebensdauer der Förderkette.

Wenn hier von Ober- bzw. Unterseite des Kettenförderers gesprochen wird, muß angemerkt werden, daß die Begriffe "oben" und "unten" nicht einschränkend auszulegen sind. Sie gelten streng genommen überhaupt nur bei Horizontal- oder Schrägförderern, wogegen bei Senkrechtförderern bestenfalls von "außen" oder "innen" gesprochen werden kann.

Wie in Fig. 4b angedeutet, kann der Raum zwischen den Laschen 5, 6 zusätzlich mit einem zusammenhängenden, elastisch nachgiebigen Füllstoff 22, wie z.B. Polyurethanschaum, ausgefüllt werden. Der Füllstoff 22 ermöglicht zwar eine Bewegung der Rundstahlglieder 2 bezüglich der Bolzen 3, schützt jedoch die Kettengelenke paktisch vollständig vor dem Eindringen von Fördergut und anderen Verunreinigungen.

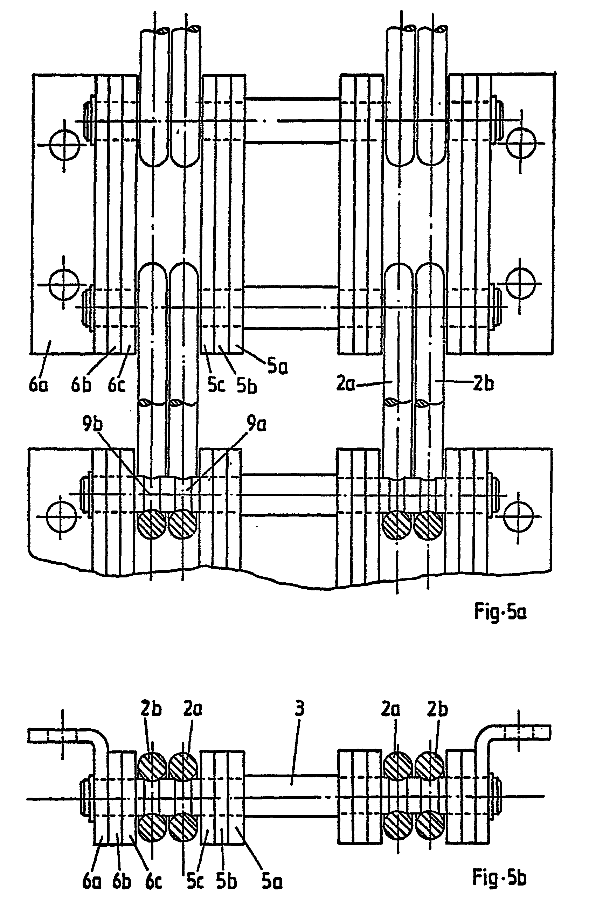

An dem in Fig. 5a und 5b gezeigten Ausführungsbeispiel ist gezeigt, wie sich unter Beibehaltung der positiven Eigenschaften der Förderketten deren Bruchkraft erhöhen läßt. Anstelle einer einzigen Außen- bzw. Innenlasche, wie z.B. nach Fig. 1, werden drei aneinanderliegende Außenlaschen 6a, b, c und drei aneinanderliegende Innenlaschen 5a, b, c verwendet. Die äußerste Außenlasche 6a ist hiebei wie die Außenlasche 6 in Fig. 1 als Winkellasche mit Bohrungen 12 ausgebildet. Die Verbindung der Laschenpaare erfolgt durch je zwei Rundstahlglieder 2a, 2b, die parallel zueinander innerhalb jedes Laschenpaares an den Querbolzen 3 angreifen. Die Querbolzen 3 weisen dementsprechend je zwei Rillen 9a, 9b innerhalb der Laschen 6c, 5c auf. Es ist ersichtlich, daß sich mit einer geringen Zahl von Kettenelementen Kettenförderer verschiedener Bruchkraft und Leistung zusammenstellen lassen.

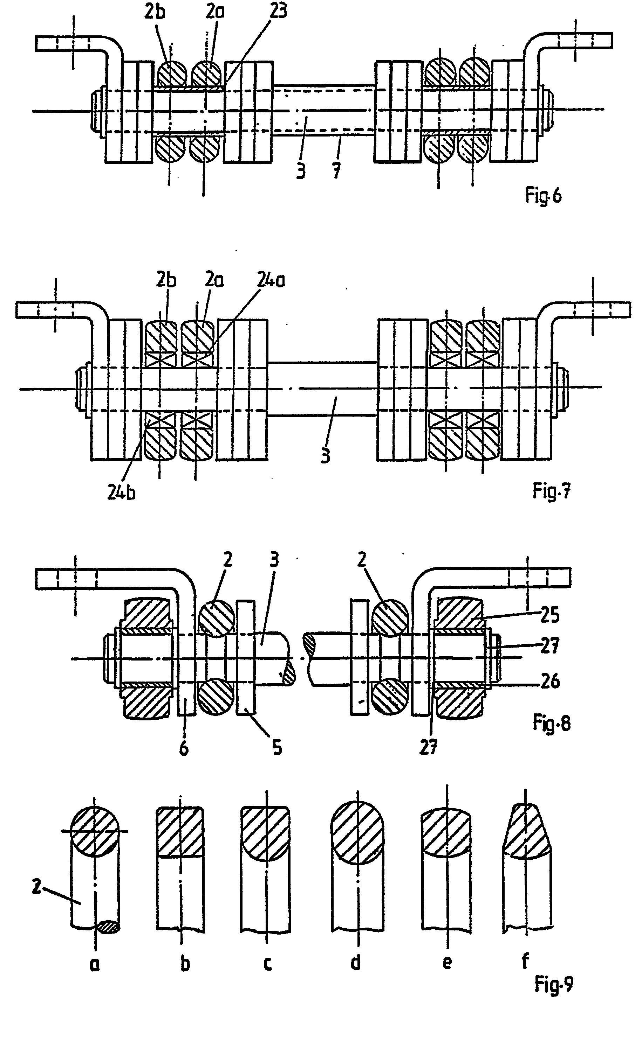

Ausgehend von der Darstellung nach Fig. 5b sind in den Fig. 6 und 7 zwei Varianten mit einer anderen Lagerung der Rundstahl glieder an den Querbolzen 3 gezeigt. Gemäß Fig. 6 sind die Kettenglieder 2a, 2b unter Zwischenschaltung einer Lagerbüchse 23 an dem Querbolzen 3 gelagert. Die Rundbzw. Profilstahlglieder 2a, 2b sind zur besseren Auflage an den Büchsen 23 innen abgeflacht. Nach Fig. 7 sind die Kettenglieder 2a, 2b unter Zuhilfenahme von Wälzlagern 24a, b od.dgl. an dem Querbolzen 3 gelagert. Die Rund- bzw. Profilstahlglieder 2a, 2b weisen hier nahezu quadratischen Querschnitt mit einer flachen Innenseite auf.

Bei einer Ausführungsform nach Fig. 8, die sonst jener nach Fig. 1b entspricht, sind die Querbolzen 3 über die Außenlaschen 6 hinaus verlängert und an den vorstehenden Enden mit äußeren Stützrollen 25 versehen, die z.B. auf Büchsen 26 gelagert sind. Beiderseits jeder Stützrolle 25 sind Scheiben 27 vorgesehen, die Sicherung der Stützrollen 25 kann z.B. mittels Sicherungsringen erfolgen.

In der vorgehenden Beschreibung wird von Rund- bzw. Profilstahlgliedern gesprochen. Dies bedarf einer näheren Erläuterung. Im einfachsten Fall werden Rundstahlglieder 2 ver wendet, die einen völlig kreisförmigen Querschnitt aufweisen, wie in Fig. 9a gezeigt. In manchen Fällen kann der Querschnitt der Glieder 2 auch von der Kreisform abweichen, wie etwa bei den Ausführungen gemäß Fig. 6 und 7. Mögliche weitere Querschnittsformen der Glieder 2 sind in den Fig. 9b bis f dargestellt.

Der Antrieb bzw. die Umlenkung eines Kettenförderers nach der Erfindung kann durch Zahnkettenräder erfolgen, deren Zähne zwischen den Innenlaschen 5 an den Bolzen 3 bzw. den Distanzhülsen 7 der Bolzen 3 angreifen. Statt dessen oder zusätzlich können die Zähne der Kettenräder auch außerhalb der Außenlaschen 6 an den Bolzen 3 angreifen, was deren Verlängerung nach außen erfordert.

## Patentansprüche

1. Kette, insbesondere für Kettenförderer, mit in parallelen Ebenen angeordneten länglichen Kettengliedern (1, 2), die durch Querbolzen (3) miteinander verbunden sind, wobei je zwei benachbarte Querbolzen (3) durch zwei in Abstand voneinander liegende Laschenpaare (4) unter Bildung eines Laschengliedes (1) miteinander verbunden sind und jedes Laschenpaar (4) aus zumindest je einer Innenlasche (5) und einer Außenlasche (6) besteht, dadurch gekennzeichnet, daß benachbarte Laschenglieder (1) durch unmittelbar mit den Innenseiten ihrer Gliedrundungen oder unter Zwischenschaltung von Lagermitteln (23; 24a,b) an den Querbolzen (3) der Laschenglieder (1) angreifende Rund- bzw. Profilstahlglieder (2; 2a,b) miteinander verbunden sind, wobei zwischen den Laschen (5, 6) eines Laschenpaares (4) zumindest je ein Rund- bzw. Profilstahlglied (2; 2a,b) angeordnet ist.

2. Kette nach Anspruch 1, dadurch gekennzeichnet, daß die Außenlaschen (6) als Winkellaschen mit je einem um etwa 90° nach außen umgebogenen Steg (11) zur Befestigung der Förderelemente ausgebildet sind (Fig.1).

3. Kette nach Anspruch 1, dadurch gekennzeichnet, daß die Innenlaschen (5) als Schenkel eines U-Profils mit einem Quer steg (13) zur Befestigung der Fördermittel ausgebildet sind (Fig. 2).

4. Kette nach Anspruch 1, dadurch gekennzeichnet, daß die Außenlaschen (6) als Schenkel eines U-Profils mit einem Quersteg (16) zur Befestigung der Fördermittel ausgebildet sind (Fig. 3).

5. Kette nach einem der Ansprüche 1 bis 4, dadurch gekennzeichnet, daß die Laschen (5, 6) jedes Laschenpaares an der Ober- und/oder Unterseite durch einen Längssteg (18, 20) geschlossen sind (Fig. 4).

6. Kette nach Anspruch 5, dadurch gekennzeichnet, daß die Innenlaschen (5) als Winkellaschen mit je einem um 90° nach außen gebogenen Steg (18) zur Befestigung der Fördermittel ausgebildet sind und jedes Laschenpaar an seiner Oberseite durch diesen Steg (18) geschlossen ist. (Fig. 4).

7. Kette nach einem der Ansprüche 1 bis 6, dadurch gekennzeichnet, daß je zwei oder mehr aneinanderliegende Innen- und/oder Außenlaschen (5a,b,c; 6a,b,c) vorgesehen sind (Fig. 5, 6, 7).

8. Kette nach einem der Ansprüche 1 bis 7, dadurch gekenn zeichnet, daß je zwei oder mehr parallel zueinander liegende Rund- bzw. Profilstahlglieder (2a,b) pro Laschenpaar vorgesehen sind (Fig. 5, 6, 7).

9. Kette nach einem der Ansprüche 1 bis 8, dadurch gekennzeichnet, daß die Laschen (5, 6) eines Laschenpaares einen in ihrer Längsmitte liegenden, z.B. angeschweißten Quersteg (21) aufweisen (Fig. 4).

10. Kette nach einem der Ansprüche 1 bis 9, dadurch gekennzeichnet, daß der Raum zwischen den Laschen (5, 6) eines Laschenpaares mit einem nachgiebigen Füllstoff (22), z.B. mit Polyurethanschaum, gefüllt ist (Fig. 4).

11. Kette nach einem der Ansprüche 1 bis 10, dadurch gekennzeichnet, daß die Querbolzen (3) im Angriffsbereich der Rund- bzw. Profilstahlglieder (2; 2a,b) zur Erhöhung der Gelenkfläche in an sich bekannter Weise profilierten Querschnitt aufweisen (Fig. 1 bis 5, 8).

12. Kette nach einem der Ansprüche 1 bis 10, dadurch gekennzeichnet, daß die Rund- bzw. Profilstahlglieder (2) mittels Büchsen (23), Wälzlagern (24a,b) od.dgl. an den Querbolzen (3) gelagert sind (Fig. 6 bzw.7).

13. Kette nach einem der Ansprüche 1 bis 12, dadurch gekennzeichnet, daß die Querbolzen (3) 1n an sicn bekannter Weise je über die Laschenpaare hinaus verlängert und mit äußeren Stützrollen (25) od.dgl. versehen sind (Fig. 8).

14. Kette nach einem der Ansprüche 1 bis 13, dadurch gekennzeichnet, daß die Innenlaschen (5; 5a,b,c) auf die Querbolzen (3) aufgepreßt sind.

15. Kette nach einem der Ansprüche 1 bis 14, dadurch gekennzeichnet, daß die Innenlaschen (5) an einem Ansatz (8) der Querbolzen (3) anliegen.

16. Kette nach einem der Ansprüche 1 bis 14, dadurch gekennzeichnet, daß die Innenlaschen (5) nach innen je an einer auf dem Bolzen aufgeschobenen Distanzhülse (17) abgestützt sind (Fig. 2, 3, 6).

17. Kette nach einem der Ansprüche 1 bis 16, dadurch gekennzeichnet, daß die Außenlaschen (6) an ihrer Außenseite mittels Sicherungsringen (10), Spannstiften od.dgl. an den Querbolzen (3) gesichert sind (Fig. 1c).

## Claims

1. A chain, particularly for a chain conveyor, having elongated chain links (1, 2) disposed in parallel planes and connected to one another by transverse bolts (3), any two adjacent transverse bolts (3) being connected to each other, by two spaced apart pairs of links (4), to form a link member (1), each pair of links (4) consisting of at least one inner link (5) and one outer link (6), characterised in that adjacently disposed link members (1) are connected to one another by round or profiled steel members (2; 2a, b) of which the inside faces of their rounded parts or interposed bearing means (23; 24a, b) engage the transverse bolts of the link members (1), at least one round or profiled steel member (2; 2a, b) being disposed between the links (5, 6) of a pair of links (4).

2. A chain according to Claim 1, characterised in that the outer links (6) are constructed as angled links, each having a web (11) bent over outwardly through about 90° for attachment of the conveyor elements (Fig. 1).

3. A chain according to Claim 1, characterised in that the inner links (5) are constructed as arms of a U-shaped member with a transverse web (13) for attachment of the conveyor means (Fig. 2).

4. A chain according to Claim 1, characterised in that the outer links (6) are constructed as arms of a U-shaped member having a transverse web (16) for attachment of the conveyor means.

5. A chain according to one of Claims 1 to 4, characterised in that the links (5, 6) of each pair of links are closed at the top and/or bottom by a longitudinal web (18, 20) (Fig. 4).

6. A chain according to Claim 5, characterised in that the inner links (5) are constructed as angled links, each having a web (18) which is bent outwardly through 90° for attachment of the conveyor means, each pair of links being closed at the top by this web (18) (Fig. 4).

7. A chain according to one of Claims 1 to 6, characterised in that in each case two or more adjacently disposed inner and/or outer links (5a, b, c; 6a, b, c) are provided (Figs. 5, 6, 7).

8. A chain according to one of Claims 1 to 7, characterised in that in each case two or more parallel round or profiled steel members (2a, b) are provided for each pair of links (Figs. 5, 6, 7).

9. A chain according to one of Claims 1 to 8, characterised in that the links (5, 6) of each pair of links have a transverse web (21) which is for instance welded into their longitudinal centre (Fig. 4).

10. A chain according to one of Claims 1 to 9, characterised in that the space between the links (5, 6) of a pair of links is filled with a resilient filling material (22), e.g. polyurethane foam (Fig. 4).

11. A chain according to one of Claims 1 to 10, characterised in that in the portion on which the round or profiled steel members (2; 2a, b) bear, the transverse bolts (3) have a cross-section which is profiled in per se known manner in order to enlarge the area of articulation (Figs. 1 to 5, 8).

12. A chain according to one of Claims 1 to 10, characterised in that the round or profiled steel members (2) are mounted on the transverse bolts (3) by means of bushes (23), rolling type bearings (24a, b) or the like (Figs. 6, 7).

13. A chain according to one of Claims 1 to 12, characterised in that the transverse bolts (3) are in per se known manner extended beyond the respective pairs of links and are provided with outer supporting rollers (25) or the like (Fig. 8).

14. A chain according to one of Claims 1 to 13, characterised in that the inner links (5; 5a, b, c) are pressed onto the transverse bolts (3).

15. A chain according to one of Claims 1 to 14, characterised in that the inner links (5) bear on an extension (8) of the transverse bolts (3).

16. A chain according to one of Claims 1 to 14, characterised in that the inner links (5) are each inwardly supported on a spacer sleeve (17) pushed onto the bolt (Figs. 2, 3, 6).

17. A chain according to one of Claims 1 to 16, characterised in that the outer links (6) are secured on their outside on the transverse bolts (3) by means of circlips (10), dowel pins or the like (Fig. 1c).

## Revendications

1. Chaîne, en particulier pour transporteur à chaîne, comportant des éléments de chaîne oblongs (1, 2) placés dans des plans parallèles qui sont reliés entre eux par des tourillons transversaux (3), deux tourillons transversaux voisins (3) étant chaque fois reliés entre eux par deux paires de maillons (4) situées à distance mutuelle en formant un élément de chaîne (1) et chaque paire de maillons (4) comprenant au moins un maillon intérieur (5) et un maillon extérieur (6) respectifs, caractérisée en ce que des éléments de chaîne (1) voisins sont reliés par des éléments d'acier ronds ou profilés (2; 2a, b) appliqués directement par les faces intérieures de leurs arrondis ou avec interposition de moyens d'appui (23; 24a, b) aux tourillons transversaux (3) des éléments de chaîne (1), au moins un élément d'acier rond ou profilé (2; 2a, b) étant placé entre les maillons (5, 6) de chaque paire de maillons (4).

2. Chaîne selon la revendication 1, caractérisée en ce que les maillons extérieurs (6) sont conformés en maillons angulaires avec chacun un étai (11) replié vers l'extérieur d'environ 90° pour la fixation des éléments de transport (figure 1).

3. Chaîne selon la revendication 1, caractérisée en ce que les maillons intérieurs (5) sont réalisés sous la forme de branches d'un profilé en U comportant un étai transversal (13) pour la fixation des éléments de transport (figure 2).

4. Chaîne selon la revendication 1, caractérisée en ce que les maillons extérieurs (6) sont réalisés sous forme de branches d'un profilé en U comportant un étai transversal (16) pour la fixation des éléments de transport (figure 3).

5. Chaîne selon l'une des revendications 1 à 4, caractérisée en ce que les maillons (5, 6) de chaque paire de maillons sont fermés à la face supérieure et/ou inférieure par un étai longitudinal (18, 20) (figure 4).

6. Chaîne selon la revendication 5, caractérisée en ce que les maillons intérieurs (5) sont réalisés sous la forme de maillons angulaires comportant chacun un étai (18) replié de 90° vers l'extérieur pour la fixation des éléments de transport, et en ce que chaque paire de maillons est fermée à sa face supérieure par cet étai (18) (figure 4).

7. Chaîne selon l'une des revendications 1 à 6, caractérisée en ce que l'on prévoit chaque fois deux ou plus de deux maillons intérieurs et/ou extérieurs contigus (5a, b, c; 6a, b, c) (figures 5, 6, 7).

8. Chaîne selon l'une des revendications 1 à 7, caractérisée en ce qu'on prévoit chaque fois deux ou plus de deux éléments d'acier ronds ou profilés (2a, 2b) mutuellement parallèles par paire de maillons (figures 5, 6, 7).

9. Chaîne selon l'une des revendications 1 à 8, caractérisée en ce que les maillons (5, 6) de chaque paire de maillons comportent un étai transversal (21) placé, par exemple par soudage, au milieu de sa longueur (figure 4).

10. Chaîne selon l'une des revendications 1 à 9, caractérisée en ce que l'intervalle entre les maillons (5, 6) d'une paire de maillons est rempli d'une charge flexible (22), par exemple d'une mousse de polyuréthane (figure 4).

11. Chaîne selon l'une des revendications 1 à 10, caractérisée en ce que les tourillons transversaux (3) présentent une section droite profilée de façon connue en soi dans la zone de contact des éléments d'acier ronds ou profilés (2; 2a, b) pour augmenter la surface d'articulation (figures 1 à 5, 8).

12. Chaîne selon l'une des revendications 1 à 10, caractérisée en ce que les éléments d'acier ronds ou profilés (2) sont placés sur les tourillons transversaux (3) au moyen de douilles (23), de roulements (24a, b) ou ànalogues (figures 6 et/ou 7, respectivement).

13. Chaîne selon l'une des revendications 1 à 12, caractérisée en ce que les tourillons transversaux (3) sont prolongés de façon connue en soi chacun au-delà des paires de maillons et comportent des rouleaux d'appui extérieurs (25) ou analogues (figure 8).

14. Chaîne selon l'une des revendications 1 à 13, caractérisée en ce que les maillons intéérieurs (5; 5a, b, c) sont emmanchés sur les chevilles transversales (3).

15. Chaîne selon l'une des revendications 1 à 14, caractérisée en ce que les maillons intérieurs (5) sont en contact avec un épaulement (8) des tourillons transversaux (3).

16. Chaîne selon l'une des revendications 1 à 14, caractérisée en ce que les maillons intérieurs (5) s'appuient vers l'intérieur chacun sur une douille d'écartement (17) enfilée sur le tourillon (figures 2, 3, 6).

17. Chaîne selon l'une des revendications 1 à 16, caractérisée en ce que les maillons extérieurs (6) sont fixés aux tourillons transversaux (3) à leur face extérieure au moyen de circlips (10), de goupilles de serrage ou de moyens analogues (figure 1c).

Fig. 1a

Fig. 1b

Fig. 1c

Fig·2

Fig·3

Fig·4a

Fig 4b

6a  6b  6c        5c  5b        5a

9b              9a

2a        2b

Fig·5a

2b  2a        3        2a  2b

6a  6b  6c    5c  5b    5a        Fig·5b

Fig·6

Fig·7

Fig·8

Fig·9